(19) Europäisches Patentamt
European Patent Office
Office européen des brevets

(11) **EP 4 685 646 A1**

(12) **EUROPEAN PATENT APPLICATION**

(43) Date of publication:
28.01.2026  Bulletin 2026/05

(21) Application number: 25190890.1

(22) Date of filing: **22.07.2025**

(51) International Patent Classification (IPC):
*G06F 9/50* (2006.01)

(52) Cooperative Patent Classification (CPC):
**G06F 9/5027;** G06F 2209/501; G06F 2209/5014;
G06F 2209/5019

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.07.2024  US 202418785360**

(71) Applicant: **SAP SE
69190 Walldorf (DE)**

(72) Inventors:
• YANG, Zhou
**69190 Walldorf (DE)**
• CHENG, Shifan
**69190 Walldorf (DE)**
• WANG, Gao-zhi
**69190 Walldorf (DE)**
• ZHANG, Mingming
**69190 Walldorf (DE)**

(74) Representative: **Müller-Boré & Partner
Patentanwälte PartG mbB
Friedenheimer Brücke 21
80639 München (DE)**

(54) **IMPROVING RESOURCE EFFICIENCY VIA CAPACITY UNIT PREDICTION**

(57)    Real-time workload for an application is converted into a capacity unit value. A trained machine-learning model receives the capacity unit data as input and generates a prediction of capacity usage for the future. Based on the prediction, additional clusters may be allocated for the application. A dataset for use in predicting future capacity unit usage by an application may be classified into two categories. A first category comprises time series data. A second category comprises service types, target user types, and other attributes with discrete characteristics. Discrete attributes are incorporated into a wide section and time-series data is integrated into a deep section. A wide and deep model combines results from the wide section and the deep section to generate a prediction of capacity units used by the application in future time periods. In response, an allocation system allocates a corresponding number of clusters.

**Description**

TECHNICAL FIELD

The subject matter disclosed herein generally relates to improving cloud resource efficiency, more specifically, to systems utilizing capacity unit prediction to improve cloud resource efficiency.

BACKGROUND

Cloud computing as a pay-per-use on-demand offer has become a preferable solution for providing various types of CPU, memory, and networkintensive applications over the Internet. A key feature of cloud computing is elasticity, which allows the provisioning and de-provisioning of computing resources on-demand via auto-scaling. As the application's workload becomes more dynamic and varies over time, balancing both saving costs and achieving good quality on autoscaling rules becomes a challenge for cloud providers.

Resources may be assigned to cloud computing applications on a clusterby-cluster basis. A cluster is a set of servers that are managed together.

Existing predictive models are inaccurate, but scheduling policies strongly depend on the accuracy of the prediction. Low accuracy results in either resource under-provisioning-in which case the application suffers from low service performance-or resource over-provisioning-in which case the waste of resources is high.

BRIEF DESCRIPTION OF THE DRAWINGS

FIG. 1 shows a network diagram illustrating an example network environment suitable for improving resource efficiency via capacity unit prediction.

FIG. 2 shows a block diagram of a forecast server, suitable for improving resource efficiency via capacity unit prediction.

FIG. 3 is a block diagram of a neural network, suitable for use as a machine learning model for improving resource efficiency via capacity unit prediction, according to some example embodiments.

FIG. 4 shows an illustration of an example database schema, suitable for training models and suitable for capacity unit prediction.

FIG. 5 shows an illustration of an example database schema, suitable for storing resource usage forecasts generated using machine learning.

FIG. 6 shows a landscape in which a machine learning model is used to improve resource efficiency via capacity unit prediction, according to some example embodiments.

FIG. 7 shows a sliding window of outputs from the machine learning model of FIG. 6, according to some example embodiments.

FIG. 8 illustrates an example neural network with wide and deep portions suitable for use as the machine learning model of FIG. 6.

FIG. 9 illustrates an example neural network with wide and deep portions suitable for use as the machine learning model of FIG. 6.

FIG. 10 shows a flowchart illustrating a method of improving resource efficiency via capacity unit prediction, according to some example embodiments.

FIG. 11 shows a block diagram showing one example of a software architecture for a computing device.

FIG. 12 shows a block diagram of a machine in the example form of a computer system within which instructions may be executed for causing the machine to perform any one or more of the methodologies discussed herein.

DETAILED DESCRIPTION

Example methods and systems are directed to improving resource efficiency via capacity unit prediction. As described herein, a machine learning model is used to accurately predict the future resource usage (e.g., memory usage, processor usage, network usage, and the like) of one or more applications and/or databases. By analyzing historical data and patterns, the machine learning model provides insights into the expected resource usage for a predetermined period of time (e.g., twenty-four hours or seven days).

The increase of software as a service (SaaS) has led to a progressive increase in both the scale of clusters and the number of tasks executed by those clusters. Thus, competition for resources between SaaS applications is a problem to be addressed. Over-allocation of resources to one SaaS application results in unused computing capacity, starvation of other SaaS applications, or both. Under-allocation of resources to a SaaS application results in poor performance or outright failure.

The duration required to assign and prepare a cluster for use by a SaaS application varies in the range of approximately 20 to 60 minutes. When a spike in demand occurs, this delay could affect many users. Pre-allocation of clusters in a cluster pool reduces the delay, but at the cost of maintaining idle clusters.

Disclosed herein is an improved system for workload prediction and resource pre-allocation. Real-time workload for an application (e.g., CPU usage, memory usage, network usage, and the like) is converted into a capacity unit value. A trained machine-learning model receives the capacity unit data as input and generates a prediction of capacity usage for the future. Based on the prediction, additional clusters may be allocated for the application.

Currently, resource pre-allocation may be performed manually based on human experience. Heuristics used by people may not respond well to unusual situations. Additionally, only relatively few personnel will have the necessary experience to make accurate predictions.

Alternatively, resources may be pre-allocated based on the prediction of a single indicator. For example, when CPU usage exceeds 80%, an additional node may be added to a cluster used by an application, or an additional cluster may be assigned to the application. However, the accuracy of predictions may be improved by considering multiple attributes (e.g., CPU usage and memory usage and network usage) rather than a single indicator. A capacity unit indicator may be generated based on CPU utilization, network input/output (I/O), several user connections, user waiting duration, number of user cancellations, cluster types, service types, number of pipelines used, or any suitable combination thereof.

A dataset for use in predicting future capacity unit usage by an application may be classified into two categories. A first category comprises time series data, including CPU utilization, network traffic, and other variables with continuous characteristics. For example, CPU utilization at any point in time may be any value in the range of 0%-100%. A second category comprises service types, target user types, and other attributes with discrete characteristics. For example, the target user type may be selected from the list consisting of "casual," "power," and "administrator." Traditional deep learning methods often struggle to directly unify these two types of data for encoding and feature construction. Proposed herein is an advanced wide and deep model to effectively use both categories in generating predictions.

The wide and deep model combines the accuracy of logic regression with the ambiguity of recommendations from a deep neural network (DNN). The wide and deep model is divided into a wide section and a deep section. The wide section involves the weighted integration of input feature data. Some features may be converted into a one-hot coded input model via an embedding layer. The deep section may include a DNN, an RNN, or a transformer. Transformer is a deep learning model that exclusively utilizes a self-attention mechanism. Its suitability for parallel operation, along with its superior accuracy and performance compared to recurrent neural networks (RNN), characterizes it.

As discussed herein, discrete attributes are incorporated into the wide section and time-series data is integrated into the deep section. The wide and deep model combines results from the wide section and the deep section to generate a prediction of capacity units used by the application in future time periods. In response, an allocation system allocates a corresponding number of clusters. Since the allocations occur based on the prediction, rather than in response to overloading of existing clusters, service improves. Since the allocations occur based on the prediction, rather than based on maintaining a predetermined amount of excess capacity, wasted resources are reduced.

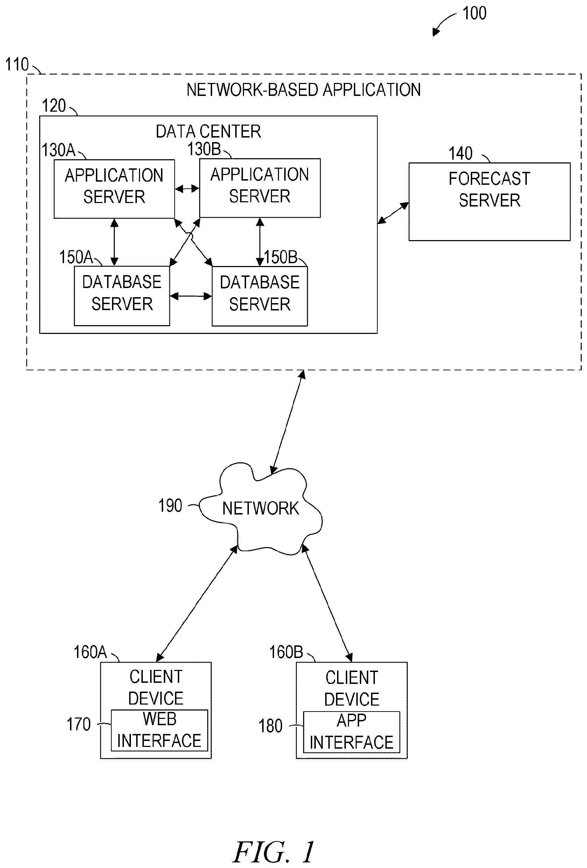

FIG. 1 shows a network diagram illustrating an example network environment 100 suitable for improving resource efficiency via capacity unit prediction. The network environment 100 includes a network-based application 110, client devices 160A and 160B, and a network 190. The network-based application 110 is implemented at a data center 120 comprising application servers 130A and 130B in communication with database servers 150A and 150B. An application executing on the application servers 130A-130B may access data from the database servers 150A-150B. The letter suffixes of reference numbers may be omitted when doing so does not raise ambiguity. For example, the application servers 130A-130B may be referred to collectively as "application servers 130." Similarly, when the specific one of the application servers 130A-130B is not of particular importance, "application server 130" may be referenced.

The forecast server 140 may use historical resource usage data for the applications and databases of the data center 120 to forecast future resource usage of the applications and databases. An administrator of the data center 120 may use the forecast resource usage information to allocate resources of the data center 120 to the applications and databases. In some example embodiments, the forecast server 140 is part of the data center 120.

An administrator may receive notifications of resource usage forecasts via the web interface 170 or the app interface 180 of forecast server 140. The forecast server 140 includes a machine learning model trained on historical resource usage data stored in log files of the application servers 130A-130B or database tables of the database servers 150A-150B. Once trained, the machine learning model may be used by the forecast server 140 to predict future resource usage of the applications and databases.

The application running on the application server 130 may provide services to the client devices 160A and 160B. For example, a user of the client device 160A may be an employee of a business using a business application. The user may use the services to generate invoices, manage employees, develop other applications, or any suitable combination thereof. The user interface for the application may be presented using a web interface 170 or an app interface 180.

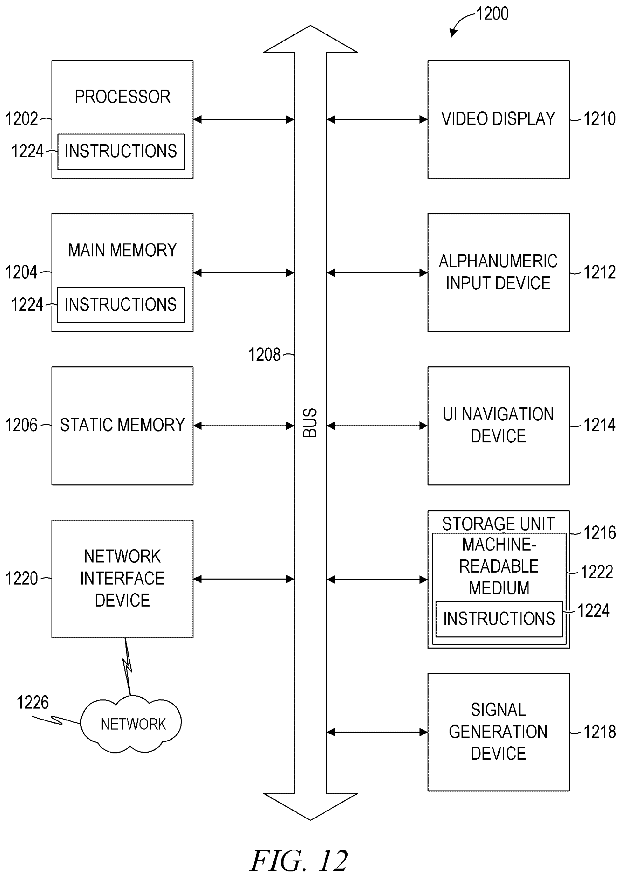

The application servers 130A-130B, the forecast server 140, the database servers 150A-150B, and the client devices 160A-160B may each be implemented in a computer system, in whole or in part, as described below with respect to FIG. 12. Any of the machines, databases, or devices shown in FIG. 1 may be implemented in a general-purpose computer modified (e.g., configured or programmed) by software to be a special-purpose computer to perform the functions described herein for that machine, database, or device. For example, a computer system able to implement any one or more of the methodologies described herein is discussed below with respect to FIG. 12. As used herein, a "database" is a data storage resource and may store data structured as a text file, a table, a spreadsheet, a relational database (e.g., an object-relational database), a triple store, a hierarchical data store, a documentoriented NoSQL database, a file store, or any suitable combination thereof. The database may be an in-memory database. Moreover, any two or more of the machines, databases, or devices illustrated in FIG. 1 may be combined into a single machine, database, or device, and the functions described herein for any single machine, database, or device may be subdivided among multiple machines, databases, or devices.

The application servers 130A-130B, the forecast server 140, the database servers 150A-150B, and the client devices 160A-160B are connected by the network 190. The network 190 may be any network that enables communication between or among machines, databases, and devices. Accordingly, the network 190 may be a wired network, a wireless network (e.g., a mobile or cellular network), or any suitable combination thereof. The network 190 may include one or more portions that constitute a private network, a public network (e.g., the Internet), or any suitable combination thereof.

Though FIG. 1 shows only one or two of each element (e.g., one forecast server 140, two application servers 130A-130B, two client devices 160A and 160B, and the like), any number of each element is contemplated. For example, the application server 130A may be one of dozens or hundreds of active and standby servers and provide services to millions of client devices. Likewise, the forecast server 140 may access data from dozens or hundreds of database servers and file servers, be used by many application servers 130, and so on.

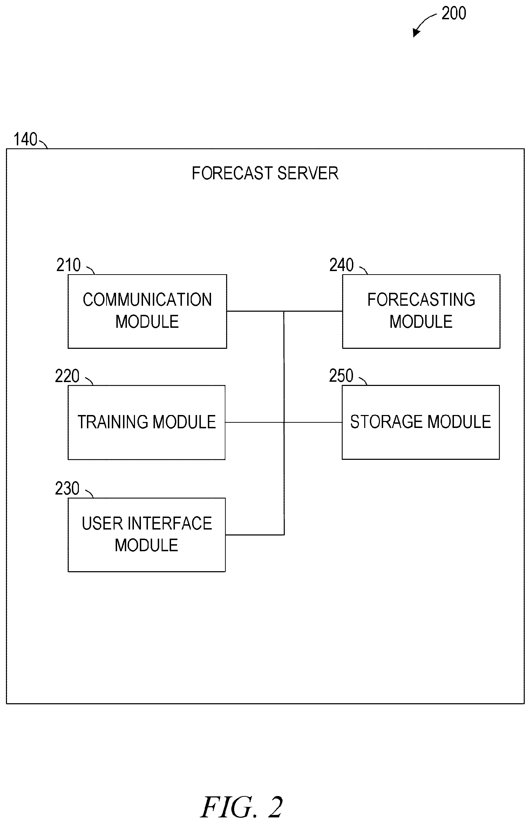

FIG. 2 shows a block diagram 200 of the forecast server 140 of FIG. 1, suitable for improving resource efficiency via capacity unit prediction. The forecast server 140 is shown as including a communication module 210, a training module 220, a user interface module 230, a forecasting module 240, and a storage module 250, all configured to communicate with each other (e.g., via a bus, shared memory, or a switch). Any one or more of the modules described herein may be implemented using hardware (e.g., a processor of a machine). For example, any module described herein may be implemented by a processor configured to perform the operations described herein for that module. Moreover, any two or more of these modules may be combined into a single module, and the functions described herein for a single module may be subdivided among multiple modules. Furthermore, modules described herein as being implemented within a single machine, database, or device may be distributed across multiple machines, databases, or devices.

The communication module 210 receives data sent to the forecast server 140 and transmits data from the forecast server 140. For example, the communication module 210 may receive, from the database server 150A of FIG. 1, historical resource usage data for an application. In response, the communication module 210 provides the historical resource usage data to the forecasting module 240. The communication module 210 may also send requests to the database servers 150 for training data to be used by the training module 220.

The training module 220 trains a machine-learning model of the forecasting module 240. The training includes providing a training set of historical resource usage data to the machine-learning model. For example, the trained machine learning model may be generated by providing a training set comprising historical resource usage data for a plurality of applications and databases.

The forecasting module 240 determines, for an application or a database and based on historical resource usage data for the application or database, a forecast of resource usage by the application or database.

Data, metadata, documents, instructions, or any suitable combination thereof may be stored and accessed by the storage module 250. For example, local storage of the forecast server 140, such as a hard drive, may be used. As another example, network storage may be accessed by the storage module 250 via the network 190 of FIG. 1.

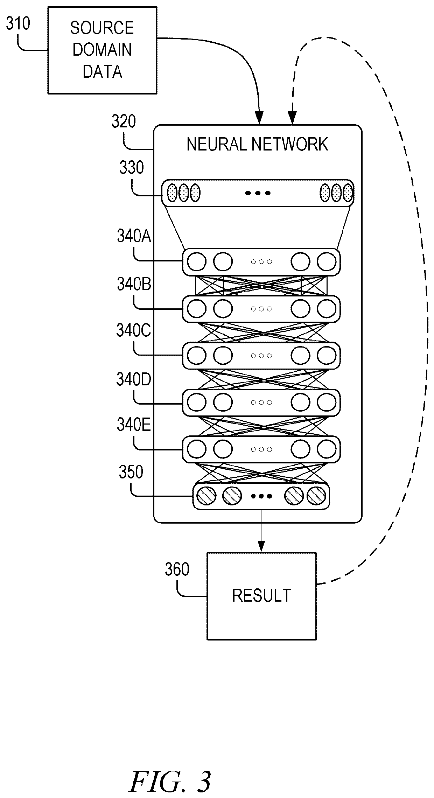

FIG. 3 is a block diagram of a neural network 320, suitable for use as a machine learning model for improving resource efficiency via capacity unit prediction, according to some example embodiments. The neural network 320 takes source domain data 310 as input and processes the source domain data 310 using an input layer 330; intermediate, hidden layers 340A, 340B, 340C, 340D, and 340E; and output layer 350 to generate a result 360.

A neural network, sometimes referred to as an artificial neural network, is a computing system based on consideration of biological neural networks of animal brains. Such systems progressively improve performance, which is referred to as learning, to perform tasks, typically without task-specific programming. For example, in image recognition, a neural network may be taught to identify images that contain an object by analyzing example images that have been tagged with a name for the object and, having learned the object and name, may use the analytic results to identify the object in untagged images.

A neural network is based on a collection of connected units called neurons, where each connection, called a synapse, between neurons can transmit a unidirectional signal with an activating strength that varies with the strength of the connection. The receiving neuron can activate and propagate a signal to downstream neurons connected to it, typically based on whether the combined incoming signals, which are from potentially many transmitting neurons, are of sufficient strength, where strength is a parameter.

Each of the layers 330-350 comprises one or more nodes (or "neurons"). The nodes of the neural network 320 are shown as circles or ovals in FIG. 3. Each node takes one or more input values, processes the input values using zero or more internal variables, and generates one or more output values. The inputs to the input layer 330 are values from the source domain data 310. The output of the output layer 350 is the result 360. The intermediate layers 340A-340E are referred to as "hidden" because they do not interact directly with either the input or the output and are completely internal to the neural network 320. Though five hidden layers are shown in FIG. 3, more or fewer hidden layers may be used.

A model may be run against a training dataset for several epochs, in which the training dataset is repeatedly fed into the model to refine its results. In each epoch, the entire training dataset is used to train the model. Multiple epochs (e.g., iterations over the entire training dataset) may be used to train the model. In some example embodiments, the number of epochs is 10, 100, 500, or 1000. Within an epoch, one or more batches of the training dataset are used to train the model. Thus, the batch size ranges between one and the size of the training dataset, and the number of epochs is any positive integer value. The model parameters are updated after each batch (e.g., using gradient descent).

For self-supervised learning, the training dataset comprises self-labeled input examples. For example, a set of color images could be automatically converted to black-and-white images. Each color image may be used as a "label" for the corresponding black-and-white image and used to train a model that colorizes black-and-white images. This process is self-supervised because no additional information, outside of the original images, is used to generate the training dataset. Similarly, when text is provided by a user, one word in a sentence can be masked and the network trained to predict the masked word based on the remaining words.

Each model develops a rule or algorithm over several epochs by varying the values of one or more variables affecting the inputs to more closely map to a desired result, but as the training dataset may be varied, and is preferably very large, perfect accuracy and precision may not be achievable. A number of epochs that make up a learning phase, therefore, may be set as a given number of trials or a fixed time/computing budget, or may be terminated before that number/budget is reached when the accuracy of a given model is high enough or low enough or an accuracy plateau has been reached. For example, if the training phase is designed to run n epochs and produce a model with at least 95% accuracy, and such a model is produced before the nth epoch, the learning phase may end early and use the produced model, satisfying the end-goal accuracy threshold. Similarly, if a given model is inaccurate enough to satisfy a random chance threshold (e.g., the model is only 55% accurate in determining true/false outputs for given inputs), the learning phase for that model may be terminated early, although other models in the learning phase may continue training. Similarly, when a given model continues to provide similar accuracy or vacillate in its results across multiple epochs - having reached a performance plateau - the learning phase for the given model may terminate before the epoch number/computing budget is reached.

Once the learning phase is complete, the models are finalized. In some example embodiments, models that are finalized are evaluated against testing criteria. In a first example, a testing dataset that includes known outputs for its inputs is fed into the finalized models to determine an accuracy of the model in handling data that it has not been trained on. In a second example, a false positive rate or false negative rate may be used to evaluate the models after finalization. In a third example, a delineation between data clusters is used to select a model that produces the clearest bounds for its clusters of data.

The neural network 320 may be a deep learning neural network, a deep convolutional neural network (CNN), a recurrent neural network, a transformer neural network, or another type of neural network. A neuron is an architectural element used in data processing and artificial intelligence, particularly machine learning. A neuron implements a transfer function by which a number of inputs are used to generate an output. In some example embodiments, the inputs are weighted and summed, with the result compared to a threshold to determine if the neuron should generate an output signal (e.g., a 1) or not (e.g., a 0 output). The inputs of the component neurons are modified through the training of a neural network. One of skill in the art will appreciate that neurons and neural networks may be constructed programmatically (e.g., via software instructions) or via specialized hardware linking each neuron to form the neural network.

An example type of layer in the neural network 320 is a Long Short Term Memory (LSTM) layer. An LSTM layer includes several gates to handle input vectors (e.g., time-series data), a memory cell, and an output vector. The input gate and output gate control the information flowing into and out of the memory cell, respectively, whereas forget gates optionally remove information from the memory cell based on the inputs from linked cells earlier in the neural network. Weights and bias vectors for the various gates are adjusted over the course of a training phase, and once the training phase is complete, those weights and biases are finalized for normal operation.

A deep neural network (DNN) is a stacked neural network, which is composed of multiple layers. The layers are composed of nodes, which are locations where computation occurs, loosely patterned on a neuron in the human brain, which fires when it encounters sufficient stimuli. A node combines input from the data with a set of coefficients, or weights, that either amplify or dampen that input. Thus, the coefficients assign significance to inputs for the task the algorithm is trying to learn. These input-weight products are summed, and the sum is passed through what is called a node's activation function, to determine whether and to what extent that signal progresses further through the network to affect the ultimate outcome. A DNN uses a cascade of many layers of non-linear processing units for feature extraction and transformation. Each successive layer uses the output from the previous layer as input. Higher-level features are derived from lower-level features to form a hierarchical representation. The layers following the input layer may be convolution layers that produce feature maps that are filtering results of the inputs and are used by the next convolution layer.

In training of a DNN architecture, a regression, which is structured as a set of statistical processes for estimating the relationships among variables, can include a minimization of a cost function. The cost function may be implemented as a function to return a number representing how well the neural network performed in mapping training examples to correct output. In training, if the cost function value is not within a pre-determined range, based on the known training images, backpropagation is used, where backpropagation is a common method of training artificial neural networks that are used with an optimization method such as a stochastic gradient descent (SGD) method.

Use of backpropagation can include propagation and weight updates. When an input is presented to the neural network, it is propagated forward through the neural network, layer by layer, until it reaches the output layer. The output of the neural network is then compared to the desired output, using the cost function, and an error value is calculated for each of the nodes in the output layer. The error values are propagated backwards, starting from the output, until each node has an associated error value, which roughly represents its contribution to the original output. Backpropagation can use these error values to calculate the gradient of the cost function with respect to the weights in the neural network. The calculated gradient is fed to the selected optimization method to update the weights to attempt to minimize the cost function.

In some example embodiments, the structure of each layer is predefined. For example, a convolution layer may contain small convolution kernels and their respective convolution parameters, and a summation layer may calculate the sum, or the weighted sum, of two or more values. Training assists in defining the weight coefficients for the summation.

One way to improve the performance of DNNs is to identify newer structures for the feature-extraction layers, and another way is by improving the way the parameters are identified at the different layers for accomplishing a desired task. For a given neural network, there may be millions of parameters to be optimized. Trying to optimize all these parameters from scratch may take hours, days, or even weeks, depending on the amount of computing resources available and the amount of data in the training set.

In different examples, various different machine learning algorithms may be applied with the present disclosure, including linear regression, random forests, decision tree learning, neural networks, DNNs, genetic or evolutionary algorithms, and the like. With the help of natural language processing (NLP) and advanced data pre-processing, a machine learning model (e.g., the neural network 320) can be trained on historical (existing) data (for instance, resource usage data) from the system to predict future data.

The transformer architecture processes an entire input at once rather than sequentially. For example, a recurrent neural network (RNN) processes words or its heart the picture is the scenario sentences sequentially, with the output of the RNN treated as an input for each input after the first (thus the use of the word "recurrent" in the name). As a result, relationships between elements that are far apart in the input are difficult to detect. The transformer architecture receives a larger input and learns the interrelationships between the elements and the output using an attention mechanism. Since all elements are processed together, the distance between the elements of the input does not affect the learning process. The output may still be generated sequentially, with the previous result (e.g., word for an LLM, pixel for an image-generating artificial intelligence, and the like) being provided as an input for determination of the next result.

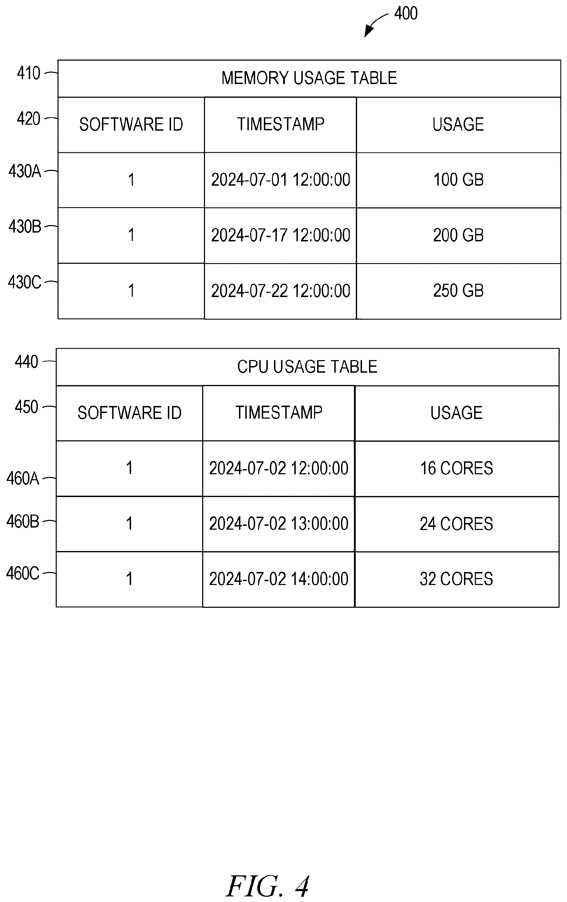

FIG. 4 shows an illustration of an example database schema 400, suitable for training models suitable for capacity unit prediction. The database schema 400 includes a memory usage table 410 and a CPU usage table 440. The memory usage table 410 includes rows 430A, 430B, and 430C of a format 420. The CPU usage table 440 includes rows 460A, 460B, and 460C of a format 450.

Each of the rows 430A-430C of the memory usage table 410 includes an amount of memory used by an application or a database, a unique identifier for the software, and a timestamp that indicates when the memory usage was evaluated, as indicated by the format 420. In the example of FIG. 4, each of the memory usage values is for a single software; however, data may be stored for dozens, hundreds, or thousands of applications or databases. The rows 430A-430C show that memory usage has increased from 100 GB on July 1st to 250 GB on July 22nd.

The CPU usage table 440 shows an amount of CPU usage for an application or a database at the indicated timestamp. As with the memory usage table 410, the example of FIG. 4 shows three rows for a single software by way of example only. The rows 460A-460C show that CPU usage has increased from 16 cores to 32 cores from noon on July 2nd to 2 PM on that day.

The memory usage table 410, the CPU usage table 440, or both, may include more or fewer fields than shown in FIG. 4. Example additional fields include: a type of the software, an identifier of an administrator associated with the software, an identifier of a tenant associated with the software, a type of memory being used, or any suitable combination thereof. The database schema 400 may include additional tables to track additional types of resource usage, such as network bandwidth consumed, graphic processing units (GPUs) used, and the like. The memory usage table 410 and the CPU usage table 440 may be combined into a single table that stores multiple usage values for a software and timestamp in a single row.

The historical resource usage data contained in the memory usage table 410 and the CPU usage table 440 may be stored for predetermined periods. For example, the memory usage and CPU usage for each software may be stored at hourly intervals, three-hour intervals, six-hour intervals, twelve-hour intervals, or daily intervals. A time-series algorithm may generate forecasts with the same granularity as the input data. For example, hourly historical data may be used to generate an hourly forecast.

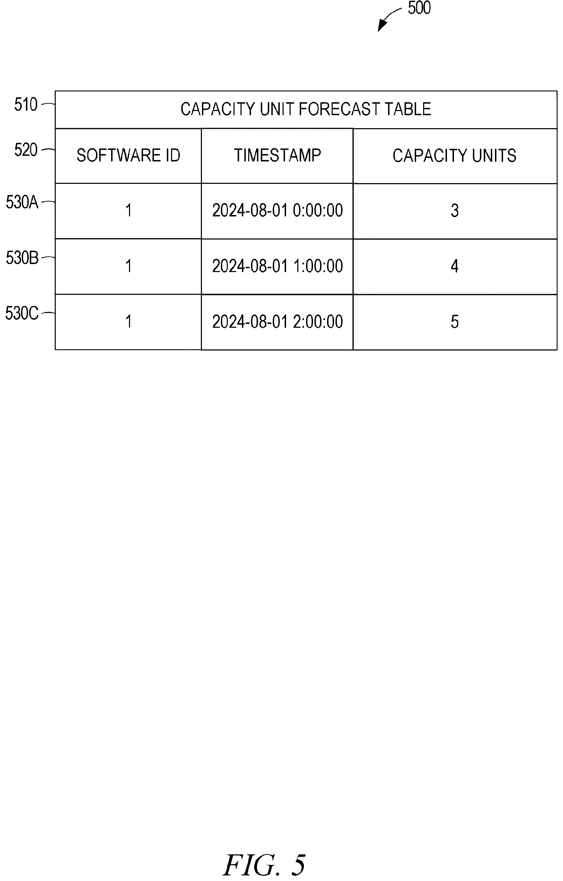

FIG. 5 shows an illustration of an example database schema 500, suitable for storing resource usage forecasts generated using machine learning. The database schema 500 includes a capacity unit forecast table 510. The capacity unit forecast table 510 includes rows 530A, 530B, and 530C of a format 520.

Each of the rows 530A-530C of the capacity unit forecast table 510 includes a unique identifier for a software, a predicted capacity unit usage by the software, and a timestamp that indicates when the software is expected to use the predicted amount of memory, as indicated by the format 520.

The capacity unit forecast data may be generated by a machine learning model at a predetermined granularity (e.g., hourly, three-hourly, half-daily, or daily). In the example of FIG. 5, an hourly forecast is generated, with the row 530A-530C including forecasts for the first three hours of August 1, 2024. In the example of FIG. 5, each of the capacity unit forecasts is for the same product. In practice, data for dozens, hundreds, or thousands of software may be stored in the capacity unit forecast table 510.

As can be seen in FIG. 5, only a single capacity unit forecast is made for each software rather than a different forecast for each type of resource provided in FIG. 4. The combined capacity unit forecast may be more useful than individual resource consumption forecasts (e.g., CPU consumption, memory consumption, network consumption, and the like) in allocating clusters to software.

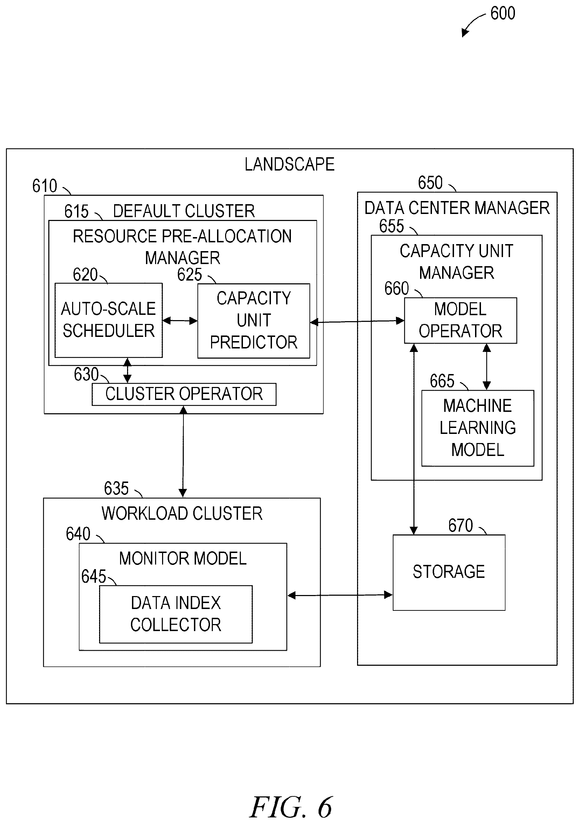

FIG. 6 shows a landscape 600 in which a machine learning model 665 is used to improve resource efficiency via capacity unit prediction, according to some example embodiments. The landscape 600 includes a default cluster 610, a workload cluster 635, and a data center manager 650. For simplicity, a single default cluster 610 and workload cluster 635 are shown. However, a default cluster 610 may exist for each of multiple software and replicas of the software may execute on multiple workload clusters 635.

The default cluster 610 includes a resource pre-allocation manager 615 and a cluster operator 630. The resource pre-allocation manager 615 includes an auto-scale scheduler 620 and a capacity unit predictor 625. The default cluster 610 is an initial cluster used by the software. The capacity unit predictor 625 communicates with the data center manager 650 to determine whether additional or fewer clusters are needed to meet quality of service (QoS) targets for the software. The information is provided to the auto-scale scheduler 620, which determines a schedule for acquiring additional clusters, freeing assigned clusters, or both. The auto-scale scheduler 620 provides scheduling data to the cluster operator 630. When a new cluster is needed, the cluster operator 630 communicates with the workload cluster 635 to request services. Multiple clusters 635 may be assigned to the software. When fewer clusters are needed, the cluster operation 630 communicates with the workload cluster 635 to release the cluster.

A monitor module 640 is included in the workload cluster 635, in the default cluster 610, or elsewhere in the data center 120 of FIG. 1. The monitor model 640 includes a data index collector 645. The monitor model 640 monitors performance and usage of the workload cluster 635. For example, CPU usage, memory usage, network usage, number of user connections, the number of users queued for service, the user groups being served, and the like may be monitored. The data index collector 645 stores the monitored data. Additionally or alternatively, the monitor model 640 may provide the monitored data to the data center manager 650 for storage.

The data center manager 650 includes a capacity unit manager 655 and a storage 670. The storage 670 stores monitoring data from one or more workload clusters 635. The capacity unit manager 655 includes a model operator 660 and a machine learning model 665. The model operator 660 accesses data from the storage 670, pre-processes the accessed data into a format suitable for processing by the machine learning model 665, and provides the data to the machine learning model 665. The machine learning model 665 generates a capacity unit prediction based on the input data. The output from the machine learning model 665 may be post-processed by the model operator 660 before being provided to the capacity unit predictor 625.

In some example embodiments, the data collected for an application is processed into JSON, such as the data structure below.

```
{
    "infra_data": {
        "CPU utilization": [64, 53, 72, 47, 64, 73, 64, 58],
        "Network I/O": [123.6, 136.7, 106.8, 53.7, 65.4, 76.4, 120.6, 178.4],
        "RAM utilization": [53, 36, 65, 23, 45, 61, 52, 33]
    },
    "user_data": {
        "User Connects": [8, 12, 26, 21, 19, 17, 22, 12]
    }
}
```

The JSON can be interpreted as a matrix of N x T dimensions, where N is the number of temporal features such as hourly CPU utilization or hourly network I/O, and T signifies the number of time periods (e.g., hourly). The matrix undergoes dot multiplication with a weight vector, W. The result of the dot product is a vector that represents the capacity units utilized over the period of time covered by the matrix.

$$\begin{bmatrix} x_{11} & \cdots & x_{1t} \\ \vdots & \ddots & \vdots \\ x_{n1} & \cdots & x_{nt} \end{bmatrix} \times \begin{bmatrix} w_1 \\ \cdots \\ w_n \end{bmatrix} = \begin{bmatrix} c_1 & \cdots & c_t \end{bmatrix}$$

Input to a wide and deep model may be formatted as JSON data, such as the example below.

```
{
    "wide_data": {
        "service type": "observability",
        "cluster type": "haas",
        "mean_pipelines_per _dat": "5"
    },
    "deep_data": {
        "capacity _unit": [0.23, 0.25, 0.26, 0.53, ..., 0.73]
    }
}
```

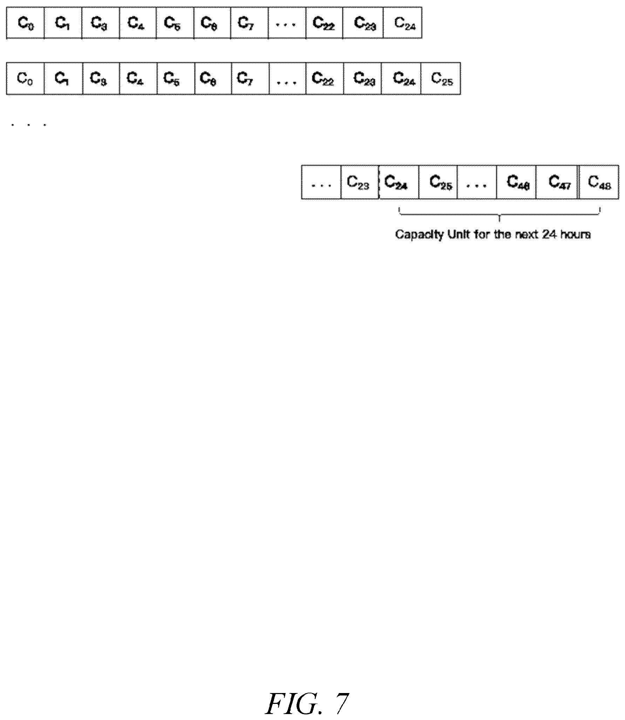

The model may employ a process of predicting the next hour's capacity unit based on the previous twenty-four hours of capacity units. The prediction is then used as input for the subsequent prediction, and this process is repeated until twenty-four predictions are made. This behavior can be likened to the operation of a sliding window, with a window size of twenty-four and a step size of one, shifting for twenty-four steps. In the example of FIG. 7, $C_0$-$C_{23}$ are the capacity unit values calculated for the past twenty-four hours. The capacity unit forecast is $C_{24}$-$C_{48}$. Each row shows the input (twenty-four values) and one output value, for the hour following the hours of the input data.

Thus, by use of the landscape 600, cluster allocation proceeds automatically and in response to current and historical resource consumption data. This reduces waste from over-allocation of resources while avoiding low QoS from under-allocation of resources, thereby improving the efficiency of the data center housing the default cluster 610 and the workload clusters 635.

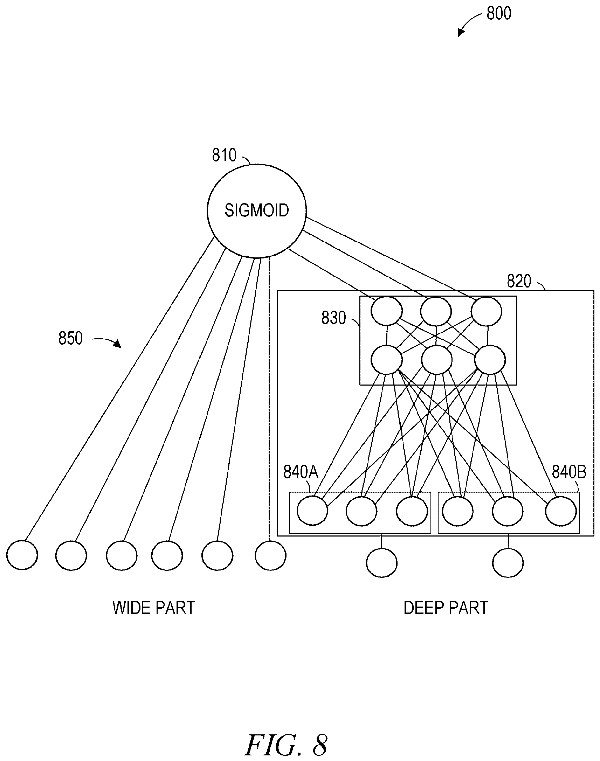

FIG. 8 illustrates an example neural network 800 with wide and deep portions suitable for use as the machine learning model 665 of FIG. 6. The neural network 800 includes a sigmoid 810, a wide part 850, and a deep part 820. The deep part 820 includes rectified linear units 830 and dense embeddings 840A and 840B. The sigmoid 810 combines the results from the wide part 850 and the deep part 820 to generate a single output from the example neural network 800.

When used for text processing, text inputs may be converted to a sparse, one-hot, embedding. In the sparse embedding, the size of the vector is equal to the size of the vocabulary. Each word is represented by a different vector in which all elements are set to zero except for the single element corresponding to the word. The one-hot embedding may be converted to a dense embedding of a smaller size. For example, a vocabulary of 50,000 words may be embedded in a vector space of two hundred dimensions. In the dense embedding, words with similar semantic meaning are closer to each other than unrelated words.

The wide and deep model combines accuracy of logic regression with the ambiguity of a DNN's recommendations. The example neural network 800 is divided into two sections, the wide part 850 and the deep part 820. The wide part 850 involves the weighted integration of input feature data, with some features being converted into a one-hot coded input model via an embedding layer. The deep part 820 may be a DNN or a transformer.

In some example embodiments, discrete attributes are incorporated into the wide part 850 and sequential data are integrated into the deep part 820. The example neural network 800 allows for a direct input of features, thereby retaining a substantial amount of original information. Consequently, the example neural network 800 can effectively memorize features, such as service type and code language, according to varying weights.

Unlike current LLMs that use 100 million parameters or more, the deep part 820 may use fewer parameters (e.g., less than fifty thousand parameters, less than one hundred thousand parameters, or less than one million parameters). Similarly, unlike current LLMs that use twelve layers or more, the deep part may include a transformer comprising only one or two layers, enhancing efficiency. The use of fewer transformer layers reduces the latency of processing.

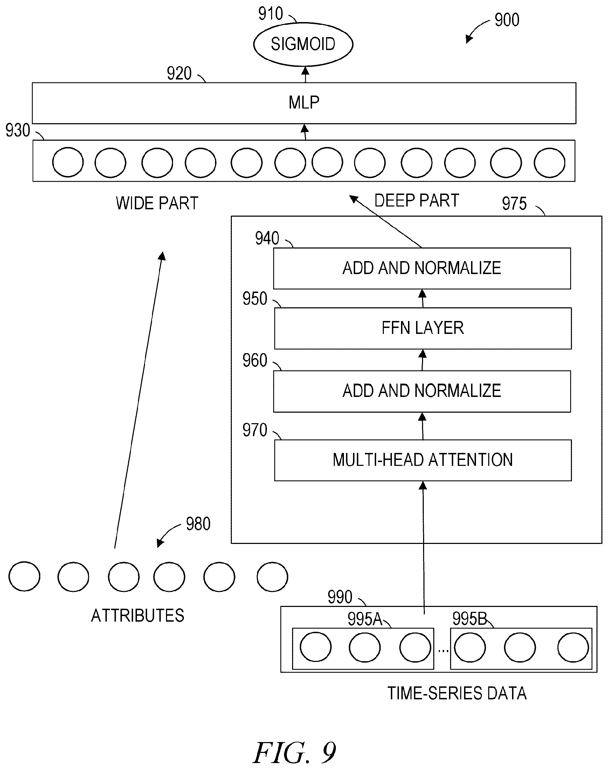

FIG. 9 illustrates an example neural network 900 with wide and deep portions suitable for use as the machine learning model 665 of FIG. 6. The example neural network 900 includes a sigmoid 910, a multilayer perceptron (MLP) 920, an MLP input 930, and a deep part 975. The inputs to the example neural network 900 are attributes 980 and time-series data 990. The deep part 975 includes a multi-head attention layer 970, add and normalize layers 940 and 960, and a feed-forward network (FFN) layer 950.

The attributes 980 are attributes with discrete characteristics such as service type, target user type, failure rate, run time, team size, language, image size, and the like. The time-series data 990 comprises multiple input vectors 995A and 995B (referred to collectively as input vectors 995). Two input vectors 995 are shown by way of example, but a larger number may be used. Each input vector 995 comprises a sequence of values for a single attribute. For example, the input vector 995A may include a series of values for CPU usage and the input vector 995B may include a series of values for memory usage.

The multi-head attention layer 970 generates an attention matrix based on internal variables and the time-series data 990. By contrast with existing deep and wide models, only a single multi-head attention layer 970 is used in the example neural network 900. The add and normalize layer 960 normalizes the output of the multi-head attention layer 970 so that all values are in a predetermined range (e.g., 0 to 1). The output of the add and normalize layer 960 is provided to the FFN layer 950. The FFN layer 950 uses a unidirectional flow and generates an output vector for the deep part 975.

The wide part processes the attributes 980 to generate an output vector for the wide part. The output vectors for the wide part and the deep part 975 are concatenated to form the MLP input 930.

The MLP 920 consists of an input layer, an output layer, and one or more hidden layers. The layers of the MLP 920 are fully connected, meaning that every node in one layer connects with a certain weight to every node in the following layer. The output of the final layer of the MLP 920 is provided to the sigmoid 910 to generate an output for the example neural network 900.

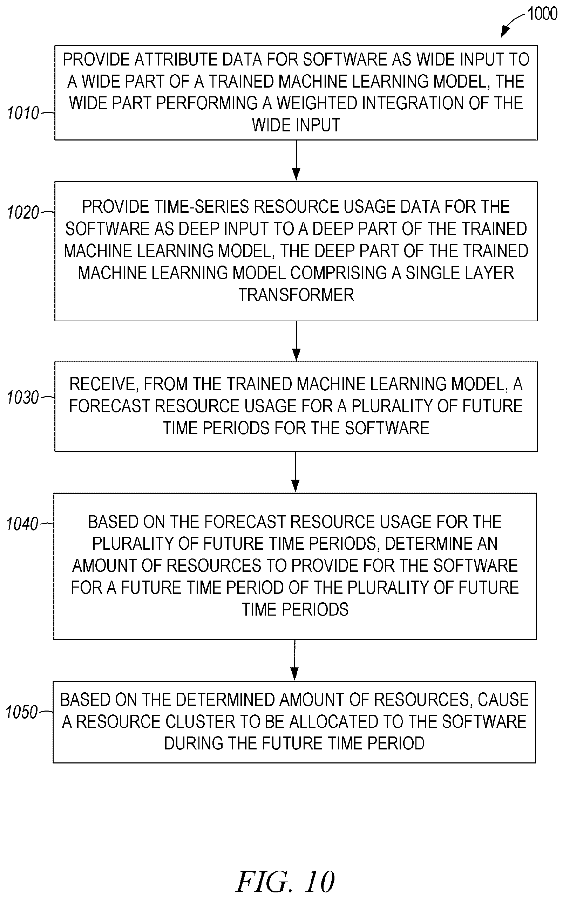

FIG. 10 shows a flowchart illustrating a method 1000 of improving resource efficiency via capacity unit prediction, according to some example embodiments. The method 1000 includes operations 1010, 1020, 1030, 1040, and 1050. By way of example and not limitation, the method 1000 is described as being performed by the forecast server 140 of FIG. 1, using the modules of FIG. 2, the machine learning model of FIG. 8, and the database schemas of FIGS. 4-5.

In operation 1010, the forecast server 140 provides attribute data for software as wide input to a wide part of a trained machine learning model (e.g., the wide part 750 of FIG. 7), the wide part performing a weighted integration of the wide input. For example, the software may have attributes such as failure rate (in the range of 0-100%), runtime (a floating-point value indicating an amount of time that the software has been running), team size (an integer value indicating a number of people maintaining the software), language (an enumerated value that indicates one of a predefined set of languages), image size (an integer or floating-point value indicating a size of a binary image for the software), service type (an enumerated value that indicates one of a predefined set of service types), or any suitable combination thereof.

The forecast server 140, in operation 1020, provides time-series resource usage data for the software as deep input to a deep part of the trained machine learning model (e.g., the deep part 720 of FIG. 7), the deep part of the trained machine learning model comprising a single layer transformer. For example, time-series resource usage data for the software may be accessed from the memory usage table 410 and the CPU usage table 440 of FIG. 4. A first vector may be created for a first point in time, with each element containing an amount of usage of a different resource at that point in time. For example, the memory usage data from the row 430A of the memory usage table 410 of FIG. 4 and the CPU usage data from the row 460A of the CPU usage table 440 of FIG. 4 may be used to create a first vector [100, 16]. Similarly, additional vectors may be created for one or more time periods. For example, the memory usage data from the rows 430B-430C and the CPU usage data from the rows 460B-460C may be used to create second and third vectors [200, 24] and [250, 32].

Prior to performing operation 1020, the forecast server 140 may prepare the time-series resource data using min-max scaling. Min-max scaling may serve to harmonize units of data across varying dimensions, ensuring that all values fall within the range of 0 to 1, as shown by the equation below.

$$x_{scaled} = \frac{x - x_{min}}{x_{max} - x_{min}}$$

Referencing again the data in FIG. 4, the normalized memory usage values of the rows 430A-430C are 0, 0.67, and 1. The normalized CPU usage values of the rows 460A-460C are 0, 0.5, and 1. Thus, the three vectors discussed above, when prepared using min-max scaling, are [0, 0], [0.67, 0.5], and [1,1].

The time-series resource data may be further processed by determining a score that represents a cluster workload in each time period by finding a weighted sum of resources used by the cluster in the time period. For example, the resource weighting coefficient method may be used to assign weights to each metric. A user may have the option to modify the weights, so long as the sum of the weights is equal to 1, as shown by the equation below.

$$w_1 + w_2 + w_3 + \cdots + w_n = 1$$

Using the weights and the scaled time-series resource data for multiple resources, a capacity unit score can be calculated, which serves as a measure of the cluster workload. The capacity unit indicator may be generated based on CPU utilization, network input/output (I/O), a number of user connections, user waiting duration, number of user cancellations, cluster types, service types, number of pipelines used, or any suitable combination thereof.

$$f(x) = w_1 x_1 + w_2 x_2 + w_3 x_3 + \cdots + w_n x_n$$

The capacity unit data may be provided as input to the deep part of the machine learning model in addition to or instead of the data for the individual resources. Using an equal weight for CPU and memory of 0.5, the capacity unit vector for the example data is [0, 0.58, 1].

In operation 1030, the forecast server 140 receives, from the trained machine learning model, a forecast resource usage for a plurality of future time periods for the software. For example, the output generated by the sigmoid 710 of FIG. 7 may be a vector comprising a plurality of elements. Each element may indicate a number of capacity units to be provided for the software during a corresponding period of time. For example, the vector [2, 3, 3, 3, 2, 3] could indicate a number of capacity units for the software on an hourly basis for the next six hours. In some example embodiments, each time period of the plurality of time periods is an hour and the plurality of time periods is twenty-four time periods.

Based on the forecast resource usage for the plurality of future time periods, the forecast server 140 determines an amount of resources to provide for the software for a future time period of the plurality of future time periods (operation 1040). For example, the forecast server 140 may determine to allocate two capacity units for the software an hour after the forecast is run, three capacity units for the following hour, and so on. Each capacity unit may correspond to a resource cluster, comprising one or more CPUs, memory, network resources, GPUs, or any suitable combination thereof.

In some example embodiments, other factors are also used in operation 1040. For example, if the total resources requested by all software exceeds the available resources, resource allocation may be prioritized or scaled pro rata.

In operation 1050, based on the determined amount of resources, the forecast server 140 causes a resource cluster to be allocated to the software during the future time period. For example, if the current number of clusters assigned to the software is one, but the determined amount for the next hour is two, an additional resource cluster is allocated. Alternatively, based on the determined amount of resources, a resource cluster may be deallocated from the software during the future time period, or a number of resource clusters allocated to the software may be left unchanged.

In view of the above-described implementations of subject matter, this application discloses the following list of examples, wherein one feature of an example in isolation or more than one feature of an example, taken in combination and, optionally, in combination with one or more features of one or more further examples are further examples also falling within the disclosure of this application.

Example 1 is a system comprising: a memory that stores instructions; and one or more processors coupled to the memory and configured to execute the instructions to perform operations comprising: providing attribute data for software as wide input to a wide part of a trained machine learning model, the wide part performing a weighted integration of the wide input; providing time-series resource usage data for the software as deep input to a deep part of the trained machine learning model, the deep part of the trained machine learning model comprising a single layer transformer; receiving, from the trained machine learning model, a forecast resource usage for a plurality of future time periods for the software; based on the forecast resource usage for the plurality of future time periods, determining an amount of resources to provide for the software for a future time period of the plurality of future time periods; and based on the determined amount of resources, causing a resource cluster to be allocated to the software during the future time period.

In Example 2, the subject matter of Example 1, wherein the operations further comprise: generating the trained machine learning model by providing a training set comprising historical resource usage data for a plurality of applications and databases.

In Example 3, the subject matter of Examples 1-2, wherein each future time period of the plurality of future time periods is an hour and the plurality of future time periods is twenty-four future time periods.

In Example 4, the subject matter of Examples 1-3, wherein the determining of the amount of resources to provide for the software for the future time period comprises determining a number of capacity units to provide for the software, each capacity unit comprising one or more central processing units and memory.

In Example 5, the subject matter of Examples 1-4, wherein the operations further comprise preparing the time-series resource usage data using min-max scaling prior to providing the time-series resource usage data to the deep part of the trained machine learning model.

In Example 6, the subject matter of Example 5, wherein the operations further comprise determining a score that represents a cluster workload in each time period by finding a weighted sum of resources used by the cluster in the time period.

In Example 7, the subject matter of Examples 1-6, wherein the time-series resource usage data comprises user connection data, user queue data, and user group data.

Example 8 is a non-transitory computer-readable medium that stores instructions that, when executed by one or more processors, cause the one or more processors to perform operations comprising: providing attribute data for software as wide input to a wide part of a trained machine learning model, the wide part performing a weighted integration of the wide input; providing time-series resource usage data for the software as deep input to a deep part of the trained machine learning model, the deep part of the trained machine learning model comprising a single layer transformer; receiving, from the trained machine learning model, a forecast resource usage for a plurality of future time periods for the software; based on the forecast resource usage for the plurality of future time periods, determining an amount of resources to provide for the software for a future time period of the plurality of future time periods; and based on the determined amount of resources, causing a resource cluster to be allocated to the software during the future time period.

In Example 9, the subject matter of Example 8, wherein the operations further comprise: generating the trained machine learning model by providing a training set comprising historical resource usage data for a plurality of applications and databases.

In Example 10, the subject matter of Examples 8-9, wherein each future time period of the plurality of future time periods is an hour and the plurality of future time periods is twenty-four future time periods.

In Example 11, the subject matter of Examples 8-10, wherein the determining of the amount of resources to provide for the software for the future time period comprises determining a number of capacity units to provide for the software, each capacity unit comprising one or more central processing units and memory.

In Example 12, the subject matter of Examples 8-11, wherein the operations further comprise preparing the time-series resource usage data using min-max scaling prior to providing the time-series resource usage data to the deep part of the trained machine learning model.

In Example 13, the subject matter of Example 12, wherein the operations further comprise determining a score that represents a cluster workload in each time period by finding a weighted sum of resources used by the cluster in the time period.

In Example 14, the subject matter of Examples 9-13, wherein the time-series resource usage data comprises user connection data, user queue data, and user group data.

Example 15 is a method comprising: providing, by one or more processors, attribute data for software as wide input to a wide part of a trained machine learning model, the wide part performing a weighted integration of the wide input; providing time-series resource usage data for the software as deep input to a deep part of the trained machine learning model, the deep part of the trained machine learning model comprising a single layer transformer; receiving, from the trained machine learning model, a forecast resource usage for a plurality of future time periods for the software; based on the forecast resource usage for the plurality of future time periods, determining an amount of resources to provide for the software for a future time period of the plurality of future time periods; and based on the determined amount of resources, causing a resource cluster to be allocated to the software during the future time period.

In Example 16, the subject matter of Example 15 includes generating the trained machine learning model by providing a training set comprising historical resource usage data for a plurality of applications and databases.

In Example 17, the subject matter of Examples 15-16, wherein each future time period of the plurality of future time periods is an hour and the plurality of future time periods is twenty-four future time periods.

In Example 18, the subject matter of Examples 15-17, wherein the determining of the amount of resources to provide for the software for the future time period comprises determining a number of capacity units to provide for the software, each capacity unit comprising one or more central processing units and memory.

In Example 19, the subject matter of Examples 15-18 includes preparing the time-series resource usage data using min-max scaling prior to providing the time-series resource usage data to the deep part of the trained machine learning model.

In Example 20, the subject matter of Example 19 includes determining a score that represents a cluster workload in each time period by finding a weighted sum of resources used by the cluster in the time period.

Example 21 is an apparatus comprising means to implement any of Examples 1-20.

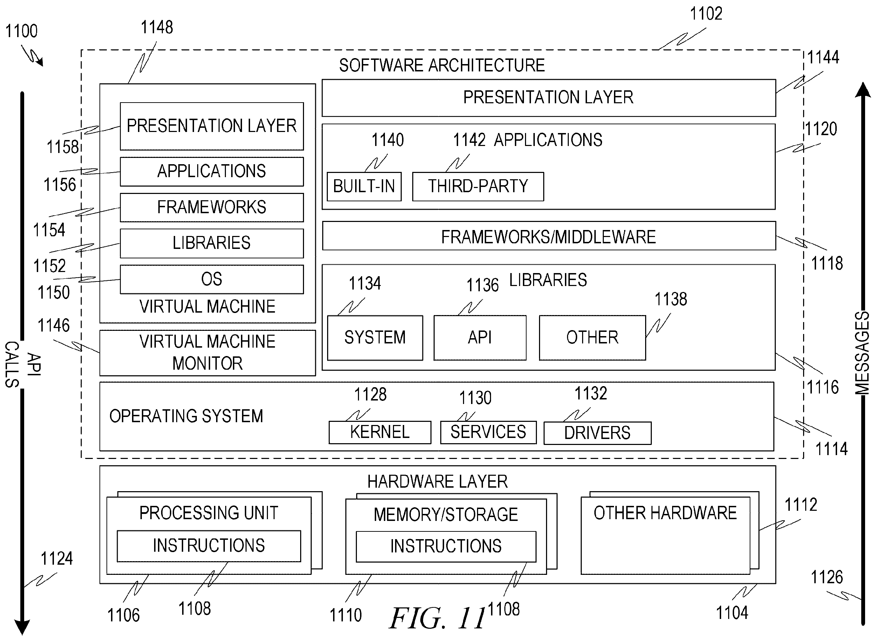

FIG. 11 shows a block diagram 1100 showing one example of a software architecture 1102 for a computing device. The software architecture 1102 may be used in conjunction with various hardware architectures, for example, as described herein. FIG. 11 is merely a non-limiting example of a software architecture, and many other architectures may be implemented to facilitate the functionality described herein. A representative hardware layer 1104 is illustrated and can represent, for example, any of the above referenced computing devices. In some examples, the hardware layer 1104 may be implemented according to the architecture of the computer system of FIG. 11.

The representative hardware layer 1104 comprises one or more processing units 1106 having associated executable instructions 1108. Executable instructions 1108 represent the executable instructions of the software architecture 1102, including implementation of the methods, modules, subsystems, and components, and so forth described herein and may also include memory and/or storage modules 1110, which also have executable instructions 1108. Hardware layer 1104 may also comprise other hardware as indicated by other hardware 1112 which represents any other hardware of the hardware layer 1104, such as the other hardware illustrated as part of the software architecture 1102.

In the example architecture of FIG. 11, the software architecture 1102 may be conceptualized as a stack of layers where each layer provides particular functionality. For example, the software architecture 1102 may include layers such as an operating system 1114, libraries 1116, frameworks/middleware 1118, applications 1120, and presentation layer 1144. Operationally, the applications 1120 and/or other components within the layers may invoke application programming interface (API) calls 1124 through the software stack and access a response, returned values, and so forth illustrated as messages 1126 in response to the API calls 1124. The layers illustrated are representative in nature and not all software architectures have all layers. For example, some mobile or special purpose operating systems may not provide a frameworks/middleware 1118 layer, while others may provide such a layer. Other software architectures may include additional or different layers.

The operating system 1114 may manage hardware resources and provide common services. The operating system 1114 may include, for example, a kernel 1128, services 1130, and drivers 1132. The kernel 1128 may act as an abstraction layer between the hardware and the other software layers. For example, the kernel 1128 may be responsible for memory management, processor management (e.g., scheduling), component management, networking, security settings, and so on. The services 1130 may provide other common services for the other software layers. In some examples, the services 1130 include an interrupt service. The interrupt service may detect the receipt of an interrupt and, in response, cause the software architecture 1102 to pause its current processing and execute an interrupt service routine (ISR) when an interrupt is accessed.

The drivers 1132 may be responsible for controlling or interfacing with the underlying hardware. For instance, the drivers 1132 may include display drivers, camera drivers, Bluetooth® drivers, flash memory drivers, serial communication drivers (e.g., Universal Serial Bus (USB) drivers), Wi-Fi® drivers, NFC drivers, audio drivers, power management drivers, and so forth depending on the hardware configuration.

The libraries 1116 may provide a common infrastructure that may be utilized by the applications 1120 and/or other components and/or layers. The libraries 1116 typically provide functionality that allows other software modules to perform tasks in an easier fashion than to interface directly with the underlying operating system 1114 functionality (e.g., kernel 1128, services 1130 and/or drivers 1132). The libraries 1116 may include system libraries 1134 (e.g., C standard library) that may provide functions such as memory allocation functions, string manipulation functions, mathematic functions, and the like. In addition, the libraries 1116 may include API libraries 1136 such as media libraries (e.g., libraries to support presentation and manipulation of various media format such as MPEG4, H.264, MP3, AAC, AMR, JPG, PNG), graphics libraries (e.g., an OpenGL framework that may be used to render two-dimensional and three-dimensional in a graphic content on a display), database libraries (e.g., SQLite that may provide various relational database functions), web libraries (e.g., WebKit that may provide web browsing functionality), and the like. The libraries 1116 may also include a wide variety of other libraries 1138 to provide many other APIs to the applications 1120 and other software components/modules.

The frameworks/middleware 1118 may provide a higher-level common infrastructure that may be utilized by the applications 1120 and/or other software components/modules. For example, the frameworks/middleware 1118 may provide various graphic user interface (GUI) functions, high-level resource management, high-level location services, and so forth. The frameworks/middleware 1118 may provide a broad spectrum of other APIs that may be utilized by the applications 1120 and/or other software components/modules, some of which may be specific to a particular operating system or platform.

The applications 1120 include built-in applications 1140 and/or third-party applications 1142. Examples of representative built-in applications 1140 may include, but are not limited to, a contacts application, a browser application, a book reader application, a location application, a media application, a messaging application, and/or a game application. Third-party applications 1142 may include any of the built-in applications as well as a broad assortment of other applications. In a specific example, the third-party application 1142 (e.g., an application developed using the Android™ or iOS™ software development kit (SDK) by an entity other than the vendor of the particular platform) may be mobile software running on a mobile operating system such as iOS™, Android™, Windows® Phone, or other mobile computing device operating systems. In this example, the third-party application 1142 may invoke the API calls 1124 provided by the mobile operating system such as operating system 1114 to facilitate functionality described herein.

The applications 1120 may utilize built-in operating system functions (e.g., kernel 1128, services 1130 and/or drivers 1132), libraries (e.g., system libraries 1134, API libraries 1136, and other libraries 1138), and frameworks/middleware 1118 to create user interfaces to interact with users of the system. Alternatively, or additionally, in some systems, interactions with a user may occur through a presentation layer, such as presentation layer 1144. In these systems, the application/module "logic" can be separated from the aspects of the application/module that interact with a user.

Some software architectures utilize virtual machines. In the example of FIG. 11, this is illustrated by virtual machine 1148. A virtual machine creates a software environment where applications/modules can execute as if they were executing on a hardware computing device. A virtual machine is hosted by a host operating system (operating system 1114) and typically, although not always, has a virtual machine monitor 1146, which manages the operation of the virtual machine 1148 as well as the interface with the host operating system (i.e., operating system 1114). A software architecture executes within the virtual machine 1148 such as an operating system 1150, libraries 1152, frameworks/middleware 1154, applications 1156 and/or presentation layer 1158. These layers of software architecture executing within the virtual machine 1148 can be the same as corresponding layers previously described or may be different.

MODULES, COMPONENTS AND LOGIC

A computer system may include logic, components, modules, mechanisms, or any suitable combination thereof. Modules may constitute either software modules (e.g., code embodied (1) on a non-transitory machine-readable medium or (2) in a transmission signal) or hardware-implemented modules. A hardware-implemented module is a tangible unit capable of performing certain operations and may be configured or arranged in a certain manner. One or more computer systems (e.g., a standalone, client, or server computer system) or one or more hardware processors may be configured by software (e.g., an application or application portion) as a hardware-implemented module that operates to perform certain operations as described herein.

A hardware-implemented module may be implemented mechanically or electronically. For example, a hardware-implemented module may comprise dedicated circuitry or logic that is permanently configured (e.g., as a special-purpose processor, such as a field programmable gate array [FPGA] or an applicationspecific integrated circuit [ASIC]) to perform certain operations. A hardware-implemented module may also comprise programmable logic or circuitry (e.g., as encompassed within a general-purpose processor or another programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired), or temporarily or transitorily configured (e.g., programmed) to operate in a certain manner and/or to perform certain operations described herein. Hardware-implemented modules may be temporarily configured (e.g., programmed), and each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiples of such hardware-implemented modules exist contemporaneously, communications may be achieved through signal transmission (e.g., over appropriate circuits and buses that connect the hardware-implemented modules). Multiple hardware-implemented modules are configured or instantiated at different times. Communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may comprise processor-implemented modules.

Similarly, the methods described herein may be at least partially processor implemented. For example, at least some of the operations of a method may be performed by one or more processors or processor-implemented modules. The performance of certain of the operations may be distributed among the one or more processors, not only residing within a single machine, but deployed across a number of machines. The processor or processors may be located in a single location (e.g., within a home environment, an office environment, or a server farm), or the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., APIs).

ELECTRONIC APPARATUS AND SYSTEM

The systems and methods described herein may be implemented using digital electronic circuitry, computer hardware, firmware, software, a computer program product (e.g., a computer program tangibly embodied in an information carrier, e.g., in a machine-readable medium for execution by, or to control the operation of, data processing apparatus, e.g., a programmable processor, a computer, or multiple computers), or any suitable combination thereof.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites (e.g., cloud computing) and interconnected by a communication network. In cloud computing, the server-side functionality may be distributed across multiple computers connected by a network. Load balancers are used to distribute work between the multiple computers. Thus, a cloud computing environment performing a method is a system comprising the multiple processors of the multiple computers tasked with performing the operations of the method.

Operations may be performed by one or more programmable processors executing a computer program to perform functions by operating on input data and generating output. Method operations can also be performed by, and apparatus of systems may be implemented as, special purpose logic circuitry, e.g., an FPGA or an ASIC.

The computing system can include clients and servers. A client and server are generally remote from each other and typically interact through a communication network. The relationship of client and server arises by virtue of computer programs running on the respective computers and having a client-server relationship to each other. A programmable computing system may be deployed using hardware architecture, software architecture, or both. Specifically, it will be appreciated that the choice of whether to implement certain functionality in permanently configured hardware (e.g., an ASIC), in temporarily configured hardware (e.g., a combination of software and a programmable processor), or in a combination of permanently and temporarily configured hardware may be a design choice. Below are set out example hardware (e.g., machine) and software architectures that may be deployed.

EXAMPLE MACHINE ARCHITECTURE AND MACHINE-READABLE MEDIUM

FIG. 12 shows a block diagram of a machine in the example form of a computer system 1200 within which instructions 1224 may be executed for causing the machine to perform any one or more of the methodologies discussed herein. The machine may operate as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1200 includes a processor 1202 (e.g., a central processing unit (CPU), a graphics processing unit (GPU), or both), a main memory 1204, and a static memory 1206, which communicate with each other via a bus 1208. The computer system 1200 may further include a video display unit 1210 (e.g., a liquid crystal display [LCD] or a cathode ray tube [CRT]). The computer system 1200 also includes an alphanumeric input device 1212 (e.g., a keyboard or a touch-sensitive display screen), a user interface (UI) navigation (or cursor control) device 1214 (e.g., a mouse), a storage unit 1216, a signal generation device 1218 (e.g., a speaker), and a network interface device 1220.

MACHINE-READABLE MEDIUM

The storage unit 1216 includes a machine-readable medium 1222 on which is stored one or more sets of data structures and instructions 1224 (e.g., software) embodying or utilized by any one or more of the methodologies or functions described herein. The instructions 1224 may also reside, completely or at least partially, within the main memory 1204 and/or within the processor 1202 during execution thereof by the computer system 1200, with the main memory 1204 and the processor 1202 also constituting a machine-readable medium 1222.

While the machine-readable medium 1222 is shown in FIG. 12 to be a single medium, the term "machine-readable medium" may include a single medium or multiple media (e.g., a centralized or distributed database, and/or associated caches and servers) that store the one or more instructions 1224 or data structures. The term "machine-readable medium" shall also be taken to include any tangible medium that is capable of storing, encoding, or carrying instructions 1224 for execution by the machine and that cause the machine to perform any one or more of the methodologies of the present disclosure, or that is capable of storing, encoding, or carrying data structures utilized by or associated with the instructions 1224. The term "machine-readable medium" shall accordingly be taken to include, but not be limited to, solid-state memories, and optical and magnetic media. Specific examples of machine-readable media include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magneto-optical disks; and compact disc read-only memory (CD-ROM) and digital versatile disc read-only memory (DVD-ROM) disks. A machine-readable medium is not a transmission medium.

TRANSMISSION MEDIUM

The instructions 1224 may further be transmitted or received over a communications network 1226 using a transmission medium. The instructions 1224 may be transmitted using the network interface device 1220 and any one of a number of well-known transfer protocols (e.g., hypertext transport protocol [HTTP]). Examples of communication networks include a local area network (LAN), a wide area network (WAN), the Internet, mobile telephone networks, plain old telephone (POTS) networks, and wireless data networks (e.g., WiFi and WiMax networks). The term "transmission medium" shall be taken to include any intangible medium that is capable of storing, encoding, or carrying instructions 1224 for execution by the machine, and includes digital or analog communications signals or other intangible media to facilitate communication of such software.

Although specific examples are described herein, it will be evident that various modifications and changes may be made to these examples without departing from the broader spirit and scope of the disclosure. Accordingly, the specification and drawings are to be regarded in an illustrative rather than a restrictive sense. The accompanying drawings that form a part hereof show by way of illustration, and not of limitation, specific examples in which the subject matter may be practiced. The examples illustrated are described in sufficient detail to enable those skilled in the art to practice the teachings disclosed herein.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" and "an" are herein used, as is common in patent documents, to include one or more than one instance. Finally, as used herein, the conjunction "or" refers to a nonexclusive "or," unless specifically stated otherwise.

**Claims**

1. A system comprising:

    a memory that stores instructions; and
    one or more processors coupled to the memory and configured to execute the instructions to perform operations comprising:

    providing attribute data for software as wide input to a wide part of a trained machine learning model, the wide part performing a weighted integration of the wide input;
    providing time-series resource usage data for the software as deep input to a deep part of the trained machine learning model, the deep part of the trained machine learning model comprising a single layer transformer;
    receiving, from the trained machine learning model, a forecast resource usage for a plurality of future time periods for the software;
    based on the forecast resource usage for the plurality of future time periods, determining an amount of resources to provide for the software for a future time period of the plurality of future time periods; and
    based on the determined amount of resources, causing a resource cluster to be allocated to the software during the future time period.

**2.** The system of claim **1,** wherein the operations further comprise:
generating the trained machine learning model by providing a training set comprising historical resource usage data for a plurality of applications and databases.

**3.** The system of claim 1 or 2, wherein each future time period of the plurality of future time periods is an hour and the plurality of future time periods is twenty-four future time periods; and/or
wherein the determining of the amount of resources to provide for the software for the future time period comprises determining a number of capacity units to provide for the software, each capacity unit comprising one or more central processing units and memory.

**4.** The system of any one of claims 1 to 3, wherein the operations further comprise preparing the time-series resource usage data using min-max scaling prior to providing the time-series resource usage data to the deep part of the trained machine learning model; and
wherein, optionally, the operations further comprise determining a score that represents a cluster workload in each time period by finding a weighted sum of resources used by the cluster in the time period.

**5.** The system of any one of claims 1 to 4, wherein the time-series resource usage data comprises user connection data, user queue data, and user group data.

**6.** A non-transitory computer-readable medium that stores instructions that, when executed by one or more processors, cause the one or more processors to perform operations comprising:

    providing attribute data for software as wide input to a wide part of a trained machine learning model, the wide part performing a weighted integration of the wide input;
    providing time-series resource usage data for the software as deep input to a deep part of the trained machine learning model, the deep part of the trained machine learning model comprising a single layer transformer;
    receiving, from the trained machine learning model, a forecast resource usage for a plurality of future time periods for the software;
    based on the forecast resource usage for the plurality of future time periods, determining an amount of resources to provide for the software for a future time period of the plurality of future time periods; and
    based on the determined amount of resources, causing a resource cluster to be allocated to the software during the future time period.

**7.** The non-transitory computer-readable medium of claim 6, wherein the operations further comprise:
generating the trained machine learning model by providing a training set comprising historical resource usage data for a plurality of applications and databases.

**8.** The non-transitory computer-readable medium of claim 6 or 7, wherein each future time period of the plurality of future time periods is an hour and the plurality of future time periods is twenty-four future time periods; and/or
wherein the determining of the amount of resources to provide for the software for the future time period comprises determining a number of capacity units to provide for the software, each capacity unit comprising one or more central processing units and memory.

**9.** The non-transitory computer-readable medium of any one of claims 6 to 8, wherein the operations further comprise preparing the time-series resource usage data using min-max scaling prior to providing the time-series resource usage data to the deep part of the trained machine learning model; and

wherein, optionally, the operations further comprise determining a score that represents a cluster workload in each time period by finding a weighted sum of resources used by the cluster in the time period.

10. The non-transitory computer-readable medium of any one of claims 6 to 9, wherein the time-series resource usage data comprises user connection data, user queue data, and user group data.

11. A method comprising:

providing, by one or more processors, attribute data for software as wide input to a wide part of a trained machine learning model, the wide part performing a weighted integration of the wide input;

providing time-series resource usage data for the software as deep input to a deep part of the trained machine learning model, the deep part of the trained machine learning model comprising a single layer transformer;

receiving, from the trained machine learning model, a forecast resource usage for a plurality of future time periods for the software;

based on the forecast resource usage for the plurality of future time periods, determining an amount of resources to provide for the software for a future time period of the plurality of future time periods; and

based on the determined amount of resources, causing a resource cluster to be allocated to the software during the future time period.

12. The method of claim 11, further comprising:

generating the trained machine learning model by providing a training set comprising historical resource usage data for a plurality of applications and databases.

13. The method of claim 11 or 12, wherein each future time period of the plurality of future time periods is an hour and the plurality of future time periods is twenty-four future time periods; and/or

wherein the determining of the amount of resources to provide for the software for the future time period comprises determining a number of capacity units to provide for the software, each capacity unit comprising one or more central processing units and memory.

14. The method of any one of claims 11 to 13, further comprising preparing the time-series resource usage data using min-max scaling prior to providing the time-series resource usage data to the deep part of the trained machine learning model.

15. The method of claim 14, further comprising determining a score that represents a cluster workload in each time period by finding a weighted sum of resources used by the cluster in the time period.

100

110

NETWORK-BASED APPLICATION

120

DATA CENTER

130A
APPLICATION SERVER

130B
APPLICATION SERVER

150A
DATABASE SERVER

150B
DATABASE SERVER

140
FORECAST SERVER

190 NETWORK

160A
CLIENT DEVICE

170 WEB INTERFACE

160B
CLIENT DEVICE

180 APP INTERFACE

*FIG. 1*

200

140

**FORECAST SERVER**

210
COMMUNICATION MODULE

240
FORECASTING MODULE

220
TRAINING MODULE

250
STORAGE MODULE

230
USER INTERFACE MODULE

*FIG. 2*

*FIG. 3*

400

| MEMORY USAGE TABLE | | |
|---|---|---|
| SOFTWARE ID | TIMESTAMP | USAGE |
| 1 | 2024-07-01 12:00:00 | 100 GB |
| 1 | 2024-07-17 12:00:00 | 200 GB |
| 1 | 2024-07-22 12:00:00 | 250 GB |

| CPU USAGE TABLE | | |
|---|---|---|
| SOFTWARE ID | TIMESTAMP | USAGE |
| 1 | 2024-07-02 12:00:00 | 16 CORES |
| 1 | 2024-07-02 13:00:00 | 24 CORES |
| 1 | 2024-07-02 14:00:00 | 32 CORES |

*FIG. 4*

500

| CAPACITY UNIT FORECAST TABLE | | |
|---|---|---|
| SOFTWARE ID | TIMESTAMP | CAPACITY UNITS |
| 1 | 2024-08-01 0:00:00 | 3 |
| 1 | 2024-08-01 1:00:00 | 4 |
| 1 | 2024-08-01 2:00:00 | 5 |

*FIG. 5*

600

LANDSCAPE

610 — DEFAULT CLUSTER

615 — RESOURCE PRE-ALLOCATION MANAGER

620 AUTO-SCALE SCHEDULER

625 CAPACITY UNIT PREDICTOR

630 CLUSTER OPERATOR

635 — WORKLOAD CLUSTER

640 — MONITOR MODEL

645 — DATA INDEX COLLECTOR

650 — DATA CENTER MANAGER

655 — CAPACITY UNIT MANAGER

660 MODEL OPERATOR

665 MACHINE LEARNING MODEL

670 STORAGE

*FIG. 6*

| $C_0$ | $C_1$ | $C_3$ | $C_4$ | $C_5$ | $C_6$ | $C_7$ | ... | $C_{22}$ | $C_{23}$ | $C_{24}$ |
|---|---|---|---|---|---|---|---|---|---|---|

| $C_0$ | $C_1$ | $C_3$ | $C_4$ | $C_5$ | $C_6$ | $C_7$ | ... | $C_{22}$ | $C_{23}$ | $C_{24}$ | $C_{25}$ |
|---|---|---|---|---|---|---|---|---|---|---|---|

. . .

| ... | $C_{23}$ | $C_{24}$ | $C_{25}$ | ... | $C_{46}$ | $C_{47}$ | $C_{48}$ |
|---|---|---|---|---|---|---|---|

Capacity Unit for the next 24 hours

*FIG. 7*

*FIG. 8*

910
SIGMOID

900

920
MLP

930
○ ○ ○ ○ ○ ○ ○ ○ ○ ○ ○ ○

WIDE PART

DEEP PART

975

940
ADD AND NORMALIZE

950
FFN LAYER

960
ADD AND NORMALIZE

970
MULTI-HEAD ATTENTION

980

○ ○ ○ ○ ○ ○

ATTRIBUTES

990

995A
○ ○ ○ ...

995B
○ ○ ○

TIME-SERIES DATA

*FIG. 9*

1000

PROVIDE ATTRIBUTE DATA FOR SOFTWARE AS WIDE INPUT TO A WIDE PART OF A TRAINED MACHINE LEARNING MODEL, THE WIDE PART PERFORMING A WEIGHTED INTEGRATION OF THE WIDE INPUT

1010

PROVIDE TIME-SERIES RESOURCE USAGE DATA FOR THE SOFTWARE AS DEEP INPUT TO A DEEP PART OF THE TRAINED MACHINE LEARNING MODEL, THE DEEP PART OF THE TRAINED MACHINE LEARNING MODEL COMPRISING A SINGLE LAYER TRANSFORMER

1020

RECEIVE, FROM THE TRAINED MACHINE LEARNING MODEL, A FORECAST RESOURCE USAGE FOR A PLURALITY OF FUTURE TIME PERIODS FOR THE SOFTWARE

1030

BASED ON THE FORECAST RESOURCE USAGE FOR THE PLURALITY OF FUTURE TIME PERIODS, DETERMINE AN AMOUNT OF RESOURCES TO PROVIDE FOR THE SOFTWARE FOR A FUTURE TIME PERIOD OF THE PLURALITY OF FUTURE TIME PERIODS

1040

BASED ON THE DETERMINED AMOUNT OF RESOURCES, CAUSE A RESOURCE CLUSTER TO BE ALLOCATED TO THE SOFTWARE DURING THE FUTURE TIME PERIOD

1050

*FIG. 10*

FIG. 11

EP 4 685 646 A1

*FIG. 12*

EUROPEAN SEARCH REPORT

Application Number

EP 25 19 0890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/151480 A1 (ORACLE INT CORP [US]) 18 July 2024 (2024-07-18) * paragraph [0042] - paragraph [0048] * * paragraph [0067] - paragraph [0072] * ----- | 1-15 | INV. G06F9/50 |
| A | DEEPIKA SAXENA ET AL: "Performance Analysis of Machine Learning Centered Workload Prediction Models for Cloud", ARXIV.ORG, CORNELL UNIVERSITY LIBRARY, 201 OLIN LIBRARY CORNELL UNIVERSITY ITHACA, NY 14853, 5 February 2023 (2023-02-05), XP091429639, DOI: 10.1109/TPDS.2023.3240567 * the whole document * ----- | 1-15 | |

TECHNICAL FIELDS
SEARCHED (IPC)

G06F

The present search report has been drawn up for all claims

| Place of search | Date of completion of the search | Examiner |
|---|---|---|
| The Hague | 25 November 2025 | Mühlenbrock, Martin |

EPO FORM 1503 03.82 (P04C01)

## ANNEX TO THE EUROPEAN SEARCH REPORT
## ON EUROPEAN PATENT APPLICATION NO.

EP 25 19 0890

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2025

| Patent document cited in search report | Publication date | Patent family member(s) | Publication date |
|---|---|---|---|
| WO 2024151480 A1 | 18-07-2024 | CN 120513444 A | 19-08-2025 |
| | | EP 4649398 A1 | 19-11-2025 |
| | | WO 2024151480 A1 | 18-07-2024 |

EPO FORM P0459

For more details about this annex : see Official Journal of the European Patent Office, No. 12/82